# EUROPÄISCHE PATENTSCHRIFT

(11) **EP 0 443 078 B1**
(45) Veröffentlichungstag und Bekanntmachung des Hinweises auf die Patenterteilung: **09.08.1995**
(21) Anmeldenummer: 90111318.3
(22) Anmeldetag: 15.06.1990
(51) Int. Cl.: F16L 51/00, F16L 59/16, F16L 9/19

(54) **Rohrleitungsabschnitt für erdverlegte, wärmegedämmte Fernleitungen**
Pipe-section for buried and insulated pipelines
Morceau de tuyau pour pipelines enterrés et isolants

(30) Priorität: 23.02.1990 CH 588/90
(43) Veröffentlichungstag der Anmeldung: 28.08.1991
(73) Patentinhaber: PAN-ISOVIT GmbH, D-67346 Speyer (DE)
(72) Erfinder: Bähr, Harri, D-6720 Speyer (DE)
(74) Vertreter: Hunziker, Jean

(56) Entgegenhaltungen:
- DE-A- 2 531 848
- DE-A- 3 936 472
- FR-A- 2 477 256
- GB-A- 2 188 394

## Beschreibung

Die Erfindung bezieht sich auf eine Rohrleitung sowie einen Rohrleitungsabschnitt mit mehreren Mediumrohren nach dem Oberbegriff des Anspruchs 1.

Aus solchen Rohrleitungsabschnitten gebildete Rohrleitungen werden beispielsweise bei Fernwärme-Hausanschlussleitungen verwendet, um Wärmeenergie mit möglichst geringen Verlusten an den Endverbraucher heranzuführen. Als Material für die Wärmedämmung zwischen dem äusseren Schutzrohr aus Kunststoff, meist Polyethylen aber auch aus Faserzement, und den Mediumrohren wird hierbei vorzugsweise Polyurethan-Hartschaum verwendet. Diese üblicherweise in der Erde meist in ein Sandbett verlegten Leitungen sind Wärmedehnungen unterworfen, welche kompensiert oder sonstwie aufgefangen werden müssen, zu welchem Zweck eine grosse Anzahl unterschiedlicher Lösungen bekannt sind.

In einer Rohrleitung gemäss der GB-A 2 188 394 sind darin mehrere Mediumrohre vorgesehen, welche als Rohrwendeln ausgebildet sind und in einem äusseren Mantelrohr verlaufen. Diese Mediumrohre sind dabei mittels Supporte in dem Mantelrohr gewissermassen geführt. Bei dieser Rohrleitung ist nachteilig, dass diese äusserst umständlich herstellbar ist, denn zum einen müssen diese Supporte in dem Mantelrohr einzeln befestigt werden und zum andern sind in der Folge die Mediumrohre einzuführen, was bei den angegebenen Längen zur Erzielung nur einer Spirale des Mediumrohres von 20 bis 60 Metern sehr umständlich zu bewerkstelligen sein dürfte. Im übrigen handelt es sich bei dieser Rohrleitung um eine Pipeline zur Förderung von heissem Oel.

Wenn in sich starre Rohrleitungsabschnitte zur Anwendung gelangen, wird beispielsweise nach der EP-OS 204 113 vorgeschlagen, die dichte Verbindung der Mediumrohre benachbarter Rohrleitungsabschnitte unter Verwendung einer Muffe herzustellen, welche in der Lage ist, Wärmedehnungen aufzunehmen. Eine andere Lösung (DE-Gbm 85 22 123) sieht vor, in jedem Rohrstab oder zwischen zwei Eckfestpunkten jeweils einen Axialkompensator einzusetzen.

Andere Vorschläge suchen das Problem über Rohrleitungsabschnitte mit eingebautem Dehnungsausgleich zu lösen, indem beispielsweise als Mediumrohr ein flexibles Stahlrohr eingesetzt wird, das thermische Dehnungen aufnimmt oder indem Mediumrohr und äusserer Schutzmantel sinusförmig verlegt oder als Wellrohre ausgebildet sind. Diese Ausführungen sind jedoch nur als Rohrleitungsabschnitt mit jeweils einem Mediumrohr bekannt, sodass beispielsweise für Fernwärme-Hausanschlussleitungen stets zwei parallel laufende Leitungen für Vorlauf bzw. Rücklauf verlegt werden müssen.

Alle vorgenannten bekannten Lösungen sind kostspielig, sei es infolge der verwendeten Materialien (Wellrohre, Kompensationsmuffen, Zwischenstege bei Doppelrohren) oder des bei der Verlegung erforderlichen Aufwandes (breite Rohrgräben, Verbindungsprobleme zwischen Stahl und Kupfer, aus verfahrenstechnischen Gründen begrenzte Fertigungslängen).

Aufgabe der Erfindung ist es, diese Nachteile zu vermeiden und einen Rohrleitungsabschnitt der eingangs genannten Gattung zu schaffen, der eine einfache Fertigung ohne aufwendige Maschinen erlaubt, bei dem ein glatter Aussenmantel möglich ist und der bei gleichem Dämmeffekt weniger Dämmaterial benötigt.

Diese Aufgabe wird durch eine Rohrleitung mit den Merkmalen des Kennzeichens des Anspruchs 1 gelöst.

Durch diese erfindungsgemässe Ausbildung werden gegenüber den bisher bekannten Ausführungen eine ganze Reihe von Vorteilen erzielt. Zunächst ergeben sich erheblich niedrigere Systemkosten dadurch, dass für jeweils zwei Mediumrohre nur ein äusseres Mantelrohr und entsprechend für die Verbindung der Mantelrohre nur jeweils eine Muffenverbindung erforderlich sind und dass die Fertigung ohne aufwendige Maschinen auf einfache Weise erfolgen kann. Da ferner beide Mediumrohre in der gleichen Dämmschicht liegen, ist auch der Bedarf an Dämmstoff bei gleichbleibender Dämmwirkung geringer. Dann fallen aber auch niedrigere Verlegungskosten an der Baustelle an, vornehmlich geringere Tiefbaukosten.

Vorteilhafte Weiterbildungen der Erfindung sind in den abhängigen Ansprüchen angegeben.

Nachfolgend wird anhand der Zeichnung ein Ausführungsbeispiel des Erfindungsgegenstandes beschrieben. Es zeigt:
- Fig. 1: eine Stirnansicht auf einen Rohrleitungsabschnitt, und
- Fig. 2: eine Seitenansicht dieses Rohrleitungsabschnitts.

Dargestellt ist ein Rohrleitungsabschnitt mit zwei Mediumrohren 1 bzw. 1′, welche mit Zwischenraum von einem Mantelrohr 3, vorzugsweise aus Polyethylen oder auch aus Faserzement umschlossen sind, wobei der Zwischenraum durch eine eingeschäumte Wärmedämmung 2, vorzugsweise aus Polyurethan-Hartschaum, fugenlos und homogen ausgefüllt ist. Die Hartschaumwärmedämmung haftet sowohl an der Aussenseite der Mediumrohre 1 und 1′, als auch an der Innenwandung des Mantelrohres 3.

Solche Rohrleitungsabschnitte werden vorfabriziert mit beidseits von der Wärmedämmung und dem Mantelrohr vorstehenden Enden 4 auf die Baustelle verbracht und dort in entsprechende im Erdreich ausgehobene Gräben, zweckmässig in ein Sandbett, verlegt. An der Stossstelle zweier miteinander zu verbindender Rohre werden die vorstehenden Enden 4 der Mediumrohre mit denjenigen des anschliessenden Leitungsabschnittes verschweisst und an der Stossstelle der beiden Rohrleitungsabschnitte, meist über eine Ueberschubmuffe, auch eine dichte Verbindung zwischen den Enden der Mantelrohre erstellt. Gleichzeitig wird die Wärmedämmung in situ ergänzt. Gegebenenfalls lässt sich, in an sich bekannter Weise, auch ein Leck- und Warnsystem integrieren, welches eine Durchfeuchtung der Wärmedämmung als Folge eines Lecks signalisiert und ortet.

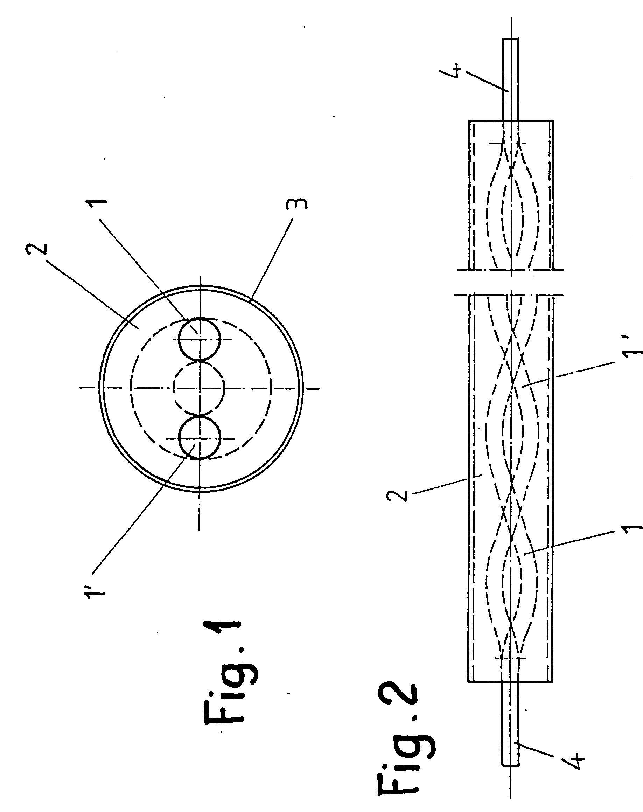

Wie aus der Fig. 2 ersichtlich sind die beiden Mediumrohre 1 und 1′ innerhalb der Wärmedämmung als Rohrwendeln ausgebildet. Der gewendelte Abschnitt jedes Mediumrohrs kann sich, wie im dargestellten Beispiel, über die ganze Länge des wärmegedämmten Leitungsabschnittes erstrecken oder die Mediumrohre könnten auch nur über einen Teil ihres Verlaufes innerhalb der Wärmedämmung als Rohrwendeln ausgebildet sein. Die aus der Wärmedämmschicht 2 vorstehenden Enden 4 der Mediumrohre sind dagegen geradlinig und verlaufen parallel zur Achse des Rohrleitungsabschnitts, um die Verbindung mit den entsprechenden Mediumrohren der daran anzuschliessenden Rohrleitungsabschnitte zu erleichtern. Hierbei ist es zweckmässig, die beiden Mediumrohre jedes Rohrleitungsabschnitts auf ihrer ganzen Länge unterschiedlich zu markieren um Verwechslungen, insbesondere bei allfällig erforderlichen Rohrkürzungen, auszuschliessen. Die Mediumrohrwendeln eines Rohrleitungsabschnitts können gegenläufig ineinander eingreifend oder gleichlaufend um wenig versetzt platzsparend angeordnet sein.

Durch die beschriebene Anordnung und Ausbildung der Mediumrohre erfolgt die Kompensation von Wärmedehnungen, z.B. bei einer Fernwärmeleitung, innerhalb jedes einzelnen Leitungsrohrabschnittes. Durch den Verbund mit dem im Erdreich festsitzenden äusseren Mantelrohr 3 über das Wärmedämmaterial 2 können sich die Mediumrohre in Längsrichtung des Rohrleitungsabschnitts praktisch nicht bewegen. Dagegen ist, dank ihrem wendelförmigen Verlauf, bei Erwärmung eine gewisse Aufweitung bzw. beim Abkühlen eine Verengung der Wendel in der Wärmedämmschicht möglich.

Bei der Wahl der Steigung der Mediumrohrwendeln ist vor allem der Wärmeausdehnungskoeffizient des für die Mediumrohre verwendeten Materials, z.B. Stahl oder Kupfer, dann aber auch die Dimension der Rohre zu berücksichtigen mit dem Ziel, das Material der Dämmschicht möglichst geringen Stauchungen auszusetzen.

## Patentansprüche

1. Rohrleitung, mit mehreren Mediumrohren, die in einem äusseren Mantelrohr verlaufen und darin geführt als Rohrwendeln ausgebildet sind, dadurch gekennzeichnet, dass die Rohrleitung aus Rohrleitungsabschnitten zusammengesetzt ist, die für erdverlegte, wärmegedämmte Fernleitungen bestimmt sind und in welchen jeweils zwei mindestens auf einem Teil ihrer Länge als Rohrwendel ausgebildete Mediumrohre (1,1′) verlaufen, die ringsum in eine das äussere Mantelrohr (3) ausfüllende verschäumte Wärmedämmung (2) eingebettet und von ihr gehalten sind, mit ihren Enden (4) aus dieser Wärmedämmung (2) vorstehen und an der Verlegungstelle des Rohrleitungsabschnitts mit den vorstehenden Enden der entsprechenden Mediumrohre (1,1′) eines gleich ausgebildeten Rohrleitungsabschnittes verbunden sind.

2. Rohrleitungsabschnitt für eine Rohrleitung nach Anspruch 1, der ein äusseres Mantelrohr (3) aufweist, dadurch gekennzeichnet, dass in dem äusseren Mantelrohr (3) jeweils zwei mindestens auf einem Teil ihrer Länge als Rohrwendel ausgebildete Mediumrohre (1,1′) verlaufen, die ringsum in eine das äussere Mantelrohr (3) ausfüllende verschäumte Wärmedämmung (2) eingebettet und von ihr gehalten sind und mit ihren Enden (4) aus dieser Wärmedämmung (2) vorstehen.

3. Rohrleitungsabschnitt nach Anspruch 2, dadurch gekennzeichnet, dass die aus der Wärmedämmung vorstehenden Enden (4) der Mediumrohre (1,1′) geradlinig sind und parallel zur Achse des Rohrleitungsabschnitts verlaufen.

4. Rohrleitungsabschnitt nach Anspruch 2 oder 3, dadurch gekennzeichnet, dass die beiden Mediumrohre (1,1′) zur Unterscheidung voneinander mit einer zugeordneten Markierung versehen sind.

## Claims

1. Tubular pipeline comprising several helicoidal medium pipes extending and guided in a tubular outer sheathing, characterized in that the pipeline is assembled from pipe sections which are destined for thermically insulated ground-buried distance pipelines, and in which extend two medium pipes (1,1′) helically wound around each other on at least part of their length and embedded and held in place in a thermically insulating foam (2) expanded in the outer sheathing (3) and filling same, the ends (4) of the medium pipes (1,1′) protruding from this insulating foam (2) and being connected at the laying spot of the pipe section to the corresponding medium pipes (1,1′) of a similarly constructed pipe section.

2. Pipe section for a tubular pipeline as claimed in claim 1, comprising an outer sheathing (3), characterized in that two medium pipes (1,1′) helically wound around each other on at least on part of their length extend in the outer sheathing (3), said medium pipes (1,1′) being embedded and held in place in a thermically insulating foam (2) expanded in the outer sheathing (3) and filling same, and having their ends (4) protruding from this insulating foam (2).

3. Pipe section as claimed in claim 2, characterized in that the ends (4) of the medium pipes (1,1′) protruding from the thermic insulation are straight and extend parallelly to the axis of the pipe section.

4. Pipe section as claimed in claim 2 or 3, characterized in that the two medium pipes have an associated marking to allow for their distinction one from the other.

## Revendications

1. Conduite tubulaire comprenant plusieurs tubes de fluide formés en hélices qui s'étendent dans une gaîne tubulaire extérieure dans laquelle ils sont guidés, caractérisé en ce que cette conduite tubulaire est assemblée de sections de conduites tubulaires, destinées à des conduites à distance isolées thermiquement, et dans lesquelles s'étendent deux tubes de fluide (1,1′) enroulés en torsade sur au moins une partie de leur longueur, ces tubes de fluide étant encastrés et tenus dans une isolation thermique (2), moussée dans la gaîne extérieure (3) qu'elle remplit, les extrémités (4) de ces tubes faisant saillie de l'isolation thermique (2) et étant reliés, à l'endroit de pose de la conduite, avec les extrémités saillantes des tubes de fluide (1,1′) correspondants d'une section de conduite tubulaire semblable.

2. Section de conduite tubulaire pour une conduite tubulaire selon la revendication 1, présentant une gaîne tubulaire (3) extérieure, caractérisée en ce que deux tubes de fluide (1,1′) enroulés en torsade sur au moins une partie de leur longueur s'étendent dans la gaîne tubulaire extérieure (3), ces tubes de fluide étant encastrés et tenus dans une isolation thermique (2) qui est moussée dans la gaîne extérieure (3) qu'elle remplit, les extrémités (4) de ces tubes faisant saillie de l'isolation thermique (2)

3. Section de conduite tubulaire selon la revendication 2, caractérisée en ce que les extrémités (4) des tubes de fluide (1,1′) qui font saillie de l'isolation thermique sont rectiligne et parallèle à l'axe de la section de conduite tubulaire.

4. Section de conduite tubulaire selon la revendication 2 ou 3, caractérisée en ce que les deux tubes de fluide (1,1′) portent une marque qui permet de les distinguer l'un de l'autre.
